# EUROPÄISCHE PATENTSCHRIFT

(11) **EP 4 023 351 B1**
(45) Veröffentlichungstag und Bekanntmachung des Hinweises auf die Patenterteilung: **22.04.2026**
(21) Anmeldenummer: 21211946.5
(22) Anmeldetag: 02.12.2021
(51) Int. Cl.: B08B 9/20, B08B 9/44, B65G 47/57, B65G 47/88

(54) **BEHÄLTERREINIGUNGSMASCHINE MIT SPERRELEMENTEN**
CONTAINER CLEANING MACHINE WITH LOCKING ELEMENTS
MACHINE DE NETTOYAGE DES RÉCIPIENTS POURVUE D'ÉLÉMENTS D'ARRÊT

(30) Priorität: 05.01.2021 DE 102021100049
(43) Veröffentlichungstag der Anmeldung: 06.07.2022
(73) Patentinhaber: KRONES Aktiengesellschaft, 93073 Neutraubling (DE)
(72) Erfinder: Raith, Tobias, Neutraubling (DE); Neubauer, Michael, Neutraubling (DE)
(74) Vertreter: Grünecker Patent- und Rechtsanwälte PartG mbB

(56) Entgegenhaltungen:
- EP-A1- 3 401 027
- DE-A1- 102019 202 332
- DE-A1- 3 815 441
- US-A1- 2011 108 396
- US-B1- 9 415 948

## Beschreibung

Die vorliegende Erfindung betrifft eine Behälterreinigungsmaschine zum Reinigen von Behältern, wie Flaschen, gemäß Anspruch 1, sowie ein Verfahren zum Reinigen von Behältern, wie Flaschen, mit einer Behälterreinigungsmaschine gemäß Anspruch 8.

### Stand der Technik

Behälterreinigungsmaschinen sind aus dem Stand der Technik bekannt. Diese Maschinen umfassen üblicherweise einen Zulauf, in dem Behälter zunächst mittels eines Massentransporteurs transportiert und dann auf eine Vielzahl von Gassen verteilt werden. In jeder Gasse ist üblicherweise eine Entnahmeeinrichtung angeordnet, die einen Behälter aus der Gasse entnehmen und einer vorbeibewegten Behälteraufnahme zuführen kann. Diese Behälteraufnahme wird dann mit dem darin aufgenommenen Behälter durch einen Reinigungsbereich der Behälterreinigungsmaschine transportiert und dabei gereinigt.

Beim Betrieb solcher Behältereinigungsmaschinen kann es zu Problemen kommen, wenn beispielsweise beschädigte Behälter in die Behälteraufnahmen aufgenommen werden oder ein Behälter aus einer Behälteraufnahme nicht ordnungsgemäß am Ende der Behälterreinigungsmaschine entfernt wird. Beispielsweise kann ein Behälter dabei beschädigt werden, was eine Entnahme des Behälters aus der Behälteraufnahme verhindern kann.

Verunreinigungen oder Reste zerstörter Behälter in einer Behälteraufnahme können dazu führen, dass beim nächsten Umlauf der Behälteraufnahme kein neuer Behälter durch die Entnahmeeinrichtung in der Behälteraufnahme platziert werden kann, ohne dass es zu weiteren Problemen kommen kann. Wenn beispielsweise Überreste eines zerstörten Behälters in der Behälteraufnahme verbleiben, kann das Hineinbewegen eines neuen Behälters aufgrund eines zumindest teilweisen Blockierens der Behälteraufnahme durch die Überreste des zerstörten Behälters dazu führen, dass der neue Behälter beschädigt oder zerstört wird.

Für solche Fälle ist bisher vorgesehen, dass am Zulauf der Behälterreinigungsmaschine eine Gasse etwa von einem Bediener vollständig gesperrt wird, so dass die gesamte Behälterreinigungsmaschine zunächst außer Funktion ist. Dies führt zu erheblichen Einschränkungen im Durchsatz der Behälterreinigungsmaschine, obwohl nur eine vergleichsweise geringe Anzahl an Behälteraufnahmen nicht funktionsfähig ist.

Die EP3401027A1 offenbart ein Zuführsystem zum Beschicken einer Wascheinheit zum Behandeln leerer Artikel mit leeren Artikeln, umfassend: einen Förderer zum Vorrücken leerer Artikel; einen Sensor, der konfiguriert ist, um das Vorhandensein und/oder die korrekte Position von leeren Artikeln auf dem Förderer zu detektieren, und konfiguriert ist, um ein Signal im Falle des Fehlens von leeren Artikeln zu erzeugen und/oder falscher Position von leeren Artikeln; einen mit dem Sensor wirkverbundenen Stopper, der in eine Stoppposition verschiebbar ist, in der er verhindert, dass leere Artikel auf dem Förderer weitertransportiert werden, wenn der Sensor ein Signal erzeugt.

Die DE3815441A1 offenbart: In einer Reinigungsmaschine für wärmeempfindliche Kunststoff-Flaschen usw. werden die Flaschen zwecks Unterbrechung der Produktion bei abgeschalteter Flaschenaufgabe und Flaschenabgabe im geschlossenen Kreislauf weiter durch die Behandlungsstationen und an der Abgabe- und Aufgabestation vorbeigeführt. Dadurch werden Beschädigungen oder unerwünschte Verformungen der Flaschen durch übermäßige Wärmeeinwirkung oder Reinigungsmitteleinwirkung zuverlässig vermieden, ohne dass die Reinigungsmaschine vorher leergefahren werden muss.

### Aufgabe

Ausgehend vom bekannten Stand der Technik besteht die zu lösende technische Aufgabe somit darin, eine Behälterreinigungsmaschine anzugeben, mit der zuverlässig die Übergabe von Behältern an defekte Behälteraufnahmen vermieden und gleichzeitig ein hoher Durchsatz an Behältern in der Behälterreinigungsmaschine sichergestellt werden kann.

### Lösung

Diese Aufgabe wird durch die erfindungsgemäße Behälterreinigungsmaschine zum Reinigen von Behältern, wie Flaschen, gemäß Anspruch 1, sowie das Verfahren zum Reinigen von Behältern, wie Flaschen, gemäß Anspruch 8 gelöst. Vorteilhafte Weiterbildungen der Erfindung sind in den Unteransprüchen erfasst.

Die erfindungsgemäße Behälterreinigungsmaschine zum Reinigen von Behältern, wie Flaschen, umfasst eine Vielzahl von Gassen, in denen Behälter einreihig in einer Transportebene transportiert werden können, und eine Vielzahl jeweils einer Gasse zugeordneter Entnahmeeinrichtungen, die einen Behälter aus der Gasse entnehmen und einer Behälteraufnahme der Behälterreinigungsmaschine zuführen können, die einen Behälter durch einen Reinigungsbereich der Behälterreinigungsmaschine transportieren kann, wobei wenigstens eine Gasse ein unabhängig betätigbares Sperrelement umfasst, das von oberhalb der Transportebene in Richtung der Transportebene bewegt werden kann, um ein Entnehmen eines Behälter aus der Gasse durch die Entnahmeeinrichtung zu blockieren. Dass das Sperrelement unabhängig betätigbar ist bedeutet in diesem Zusammenhang, dass das Sperrelement einer Gasse unabhängig von den Sperrelementen anderer Gassen betätigt werden kann, so dass gezielt lediglich eine Gasse der Behälterreinigungsmaschine gesperrt werden kann.

Die Behälterreinigungsmaschine ist bevorzugt als Behälterreinigungsmaschine für die Reinigung von Behältern in der getränkeverarbeitenden Industrie ausgebildet und umfasst entsprechend die hierfür nötigen Einrichtungen, wie etwa ein oder mehrere Laugenbäder und/oder ein oder mehrere Säurebäder, in die die Behälter eingetaucht und dort mit Reinigungsmedium beaufschlagt werden können. Alternativ oder zusätzlich können Sprüheinrichtungen vorgesehen sein, die ein Reinigungsmedium auf oder in die Behälter sprühen.

Bevorzugt sind die Behälter als Flaschen, insbesondere als Flaschen aus Glas vorgesehen.

Durch die Verwendung einzelner Sperrelemente für die Gassen ist es möglich, lediglich genau eine Gasse zu sperren, wenn hier ein Fehler zumindest einer Behälteraufnahme auftritt. Die übrigen Gassen können dann weiter betrieben werden. Damit kann der Durchsatz der Behälterreinigungsmaschine nur soweit beschränkt werden, wie dies unbedingt notwendig ist, um Probleme zu vermeiden.

Es kann vorgesehen sein, dass die Behälterreinigungsmaschine weiterhin ein Antriebselement für jedes Sperrelement umfasst, wobei das Antriebselement durch eine Steuereinheit der Behälterreinigungsmaschine zum Betätigen des Sperrelements angesteuert werden kann.

Das Antriebselement kann beispielsweise ein pneumatisches Element oder ein Elektromotor wie etwa ein Servomotor sein. Insbesondere kann dieses Antriebselement unabhängig von weiteren Antriebselementen weiterer Sperrelemente, die anderen Gassen zugeordnet sind, angesteuert und betrieben werden. Hiermit kann eine Betätigung des Sperrelements schnell erfolgen, womit nicht nur das Blockieren, sondern auch das erneute Freigeben einer Gasse bewerkstelligt werden kann. Dies erlaubt ein Sperren und Freigabe einer Gasse in kurzen Zeitintervallen.

Es kann vorgesehen sein, dass die Steuereinheit ausgebildet ist, das Betätigen des Sperrelements mittels des Antriebselements so zu steuern, dass die Entnahme eines Behälters für wenigstens eine Behälteraufnahme blockieren kann. Das Blockieren der Entnahme eines Behälters mittels des Sperrelements für wenigstens eine Behälteraufnahme ist hier bevorzugt so zu verstehen, dass das Blockieren durch das Sperrelement für eine Dauer erfolgt, die dem Entnahmevorgang der Entnahmeeinrichtung (umfassend das Entnehmen des Behälters aus der Gasse und Zuführen des Behälters zur Behälteraufnahme) entspricht. Dies erlaubt ein Blockieren der Gasse bzw. der Entnahme von Behältern dieser Gasse für genau die Anzahl von Behälteraufnahmen, die defekt sind. Hiermit wird erreicht, dass der Durchsatz der Behälter der Behälterreinigungsmaschine nur um genau die Anzahl zu einer gewissen Zeit nicht funktionsfähiger Behälteraufnahmen reduziert wird.

Erfindungsgemäß kann das Sperrelement zwischen einer Freigabeposition, in der die Entnahme eines Behälters nicht blockiert wird, und einer Sperrposition, in der die Entnahme eines Behälters blockiert wird, bewegt werden, wobei eine Position des Sperrelements in der Freigabeposition und/oder der Sperrposition in einer Richtung senkrecht zur Transportebene einstellbar ist. Durch dieses Einstellen der Position des Sperrelements ist es möglich, die Behälterreinigungsmaschine auch mit unterschiedlich großen Behältern zu betreiben und dennoch eine zuverlässige Sperrung der Behälteraufnahmen bei eventuell auftretenden Problemen zu realisieren.

In einer Ausführungsform ist vorgesehen, dass die Behälterreinigungsmaschine weiterhin einen Massentransporteur stromauf der Vielzahl von Gassen umfasst und der Massentransporteur Behälter den Gassen zuführen kann. Hiermit wird ein möglichst hoher Durchsatz der Behälterreinigungsmaschine erreicht.

Es kann weiterhin vorgesehen sein, dass eine Gasse eine Erkennungseinrichtung im Bereich des Sperrelements umfasst, wobei die Erkennungseinrichtung zum Erkennen eines Behälters in dem Bereich ausgebildet ist. Durch diese Ausführungsform ist es möglich, das Betätigen des Sperrelements so zu steuern, dass dieses genau zwischen zwei Behältern betätigt wird, um einen Behälter durch die Entnahmeeinrichtung entnehmen zu lassen und die Entnahme des nächsten Behälters durch Betätigen des Sperrelements zu blockieren.

Erfindungsgemäß ist ein Anstellwinkel des Sperrelements relativ zur Transportebene einstellbar. Hierdurch kann etwa auch auf abweichende Formen von Behältern, die mit der Behälterreinigungsmaschine gereinigt werden soll, reagiert werden.

Weiterhin kann wenigstens eine Gasse ein Kraftaufnahmeelement umfassen, das auf das Sperrelement der Gasse in Transportrichtung der Behälter wirkende Kräfte aufnehmen und ableiten kann. Beschädigungen des Sperrelements können hierdurch vermieden werden. Gleichzeitig kann der auf den durch das Sperrelement in seiner Bewegung blockierten Behältern wirkende Druck der nachfolgenden Behälter kompensiert werden.

Insbesondere kann jede Gasse ein Sperrelement umfassen. Damit wird eine gesteigerte Flexibilität beim Sperren einzelner oder mehrerer Gassen der Behälterreinigungsmaschine erreicht.

Das erfindungsgemäße Verfahren zum Reinigen von Behältern, wie Flaschen, wird mittels einer Behälterreinigungsmaschine realisiert, wobei die Behälterreinigungsmaschine eine Vielzahl von Gassen, in der Behälter einreihig in einer Transportebene transportiert werden, und eine Vielzahl jeweils einer Gasse zugeordneter Entnahmeeinrichtungen, die einen Behälter aus der Gasse entnehmen und einer Behälteraufnahme der Behälterreinigungsmaschine zuführen, die einen aufgenommenen Behälter durch einen Reinigungsbereich der Behälterreinigungsmaschine transportiert, umfasst, wobei wenigstens eine Gasse ein unabhängig betätigbares Sperrelement umfasst, das von oberhalb der Transportebene in Richtung der Transportebene bewegt wird, sodass ein Entnehmen eines Behälter aus der Gasse durch die Entnahmeeinrichtung blockiert wird.

Mit diesem Verfahren kann der Betrieb der Behälterreinigungsmaschine mit hohem Durchsatz erfolgen, selbst wenn eine Gasse aufgrund etwa einer Fehlfunktion einer Behälteraufnahme gesperrt werden muss.

In einer Ausführungsform ist ferner vorgesehen, dass die Behälterreinigungsmaschine ein Antriebselement für jedes Sperrelement umfasst, wobei das Antriebselement durch eine Steuereinheit der Behälterreinigungsmaschine angesteuert wird, um das Sperrelement zu betätigen. Mit dieser Ausführungsform wird eine flexible und gleichzeitig zuverlässige Betätigung des Sperrelements möglich.

Es kann auch vorgesehen sein, dass die Steuereinheit das Betätigen des Sperrelements mittels des Antriebselements so steuert, dass die Entnahme eines Behälters für eine Dauer blockiert wird, die wenigstens einem Entnahmevorgang entspricht. Das Entnehmen eines Behälters wird damit nur für die Dauer blockiert, während der die Entnahme und Übergabe eines solchen Behälters an eine ggf. defekte oder blockierte Behälteraufnahme erfolgen würde. Dies lässt sich in einer Ausführungsform auch auf eine Anzahl unmittelbar aufeinanderfolgender Behälteraufnahmen ausweiten. Das Entnehmen der Behälter bzw. die Gasse werden dann für die Dauer der aufeinanderfolgenden Entnahmevorgänge entsprechend der aufeinanderfolgenden Anzahl von defekten/blockierten Behälteraufnahmen blockiert. Hiermit wird die Reduzierung des Durchsatzes der Behälterreinigungsmaschine aufgrund einer defekten oder blockierten Behälteraufnahme noch weiter reduziert.

In einer Ausführungsform ist vorgesehen, dass die Steuereinheit das Antriebselement abhängig von einer Information, die indikativ für die Aufnahmefähigkeit einer Behälteraufnahme ist, so steuert, dass, wenn die Information angibt, dass die Behälteraufnahme keinen Behälter aufnehmen kann, die Entnahme eines Behälters blockiert wird und die Entnahme eines Behälters wieder freigegeben wird, wenn die Information für eine andere Behälteraufnahme angibt, dass die Behälteraufnahme einen Behälter aufnehmen kann.

Die Information kann beispielsweise durch einen Sensor am Ausgang der Behälterreinigungsmaschine bereitgestellt werden, der die Behälteraufnahmen hinsichtlich ihrer Aufnahmefähigkeit überprüft. Dabei kann der Sensor beispielsweise feststellen, ob sich nach dem Übergabepunkt eines Behälters aus der Behälterreinigungsmaschine an eine sich etwa anschließende Transporteinrichtung immer noch ein Behälter oder Reste dessen in der betreffenden Behälteraufnahme befinden. Wird dies von dem Sensor erkannt, kann eine entsprechende Information an die Steuereinheit ausgegeben werden, die dann das Antriebselement so steuert, dass die Übergabe eines Behälters an diese Behälteraufnahme blockiert wird. Damit ist eine zuverlässige Steuerung der Sperrelemente gewährleistet.

Erfindungsgemäß wird das Sperrelement zwischen einer Freigabeposition, in der die Entnahme eines Behälters nicht blockiert wird, und einer Sperrposition, in der die Entnahme eines Behälters blockiert wird, bewegt, wobei eine Position des Sperrelements in der Freigabeposition und/oder der Sperrposition in einer Richtung senkrecht zur Transportebene einstellbar ist. Mit dieser Ausgestaltung kann unterschiedlichen Größen von Behältern Rechnung getragen werden. Es kann vorgesehen sein, dass die Position des Sperrelements auch während des Betriebs der Behälterreinigungsmaschine, etwa abhängig von einer Feststellung hinsichtlich der Größe eines Behälters in der Gasse eingestellt wird. Damit kann die Behälterreinigungsmaschine auch bei gleichzeitiger Behandlung unterschiedlich großer oder unterschiedlich geformter Behälter mittels der Sperrelemente gezielt blockiert werden. Erfindungsgemäß ist ein Anstellwinkel des Sperrelements relativ zur Transportebene einstellbar.

In einer weiteren Ausführungsform wird die Position des Sperrelements abhängig von einer Größe eines Behälters eingestellt. Dies kann entweder einmal für einen Betriebszyklus der Behälterreinigungsmaschine, während dem Behälter nur einer Form und/oder Größe behandelt werden, eingestellt werden, oder es kann (alternativ oder zusätzlich) während des Betriebs der Behälterreinigungsmaschine abhängig von den einer Gasse zugeführten Behältern und deren Form bzw. Größe erfolgen.

### Kurze Beschreibung der Figuren

- Fig. 1: zeigte eine Reinigungsmaschine in Draufsicht gemäß einer Ausführungsform
- Fig. 2: zeigt eine einzelne Gasse mit einem Sperrelement gemäß einer Ausführungsform
- Fig. 3a-c: zeigen verschiedene Einstellungen der Freigabeposition, der Sperrposition und der Winkeleinstellung
- Fig. 4a-d: zeigen unterschiedliche Ausführungsformen des Sperrelements

### Ausführliche Beschreibung

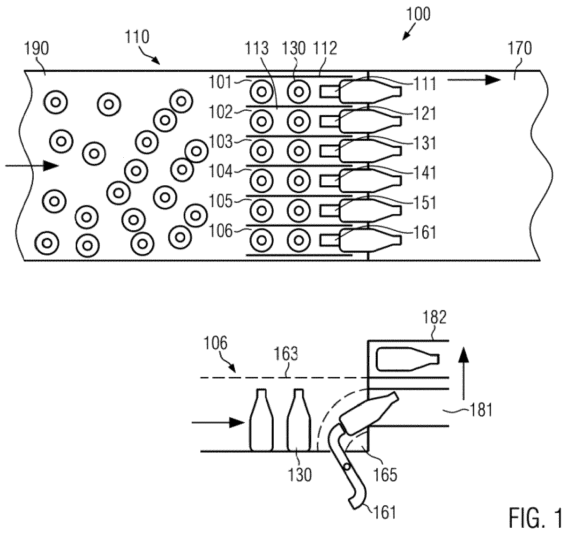

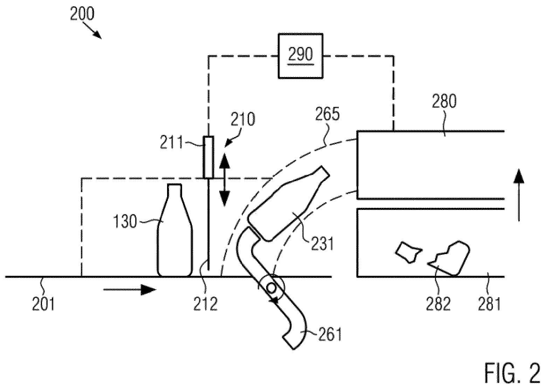

Fig. 1 zeigt eine schematische Draufsicht auf eine Behälterreinigungsmaschine 100 gemäß einer Ausführungsform. Detailliertere Darstellungen der Ausführungsformen finden sich beginnend mit Fig. 2.

In Fig. 1 ist in der Draufsicht die Behälterreinigungsmaschine 100 dargestellt. Diese umfasst üblicherweise einen Zulauf 110, in dem die Behälter transportiert werden. Der Zulauf 110 umfasst zumindest eine Reihe von Gassen 101 bis 106, in denen die Behälter 130 einreihig transportiert werden. Die Gassen 101 bis 106 sind üblicherweise durch Begrenzungen 112 und 113 voneinander getrennt, sodass ein ungehinderter einreihiger Transport der Behälter in den jeweiligen Gassen möglich ist, unabhängig davon, ob ein entsprechender Transport auch in den übrigen Gassen ordnungsgemäß funktioniert.

Während hier 6 Gassen dargestellt sind, ist die Erfindung nicht auf genau 6 Gassen beschränkt. Es können auch mehr Gassen, etwa 10, 20 oder 30 Gassen vorgesehen sein oder auch mehr oder auch weniger. Die Anzahl der Gassen kann bei der Konstruktion der Behälterreinigungsmaschine etwa abhängig vom zu erzielenden Durchsatz an Behältern vorgesehen werden.

Der Zulauf 110 kann ferner stromauf der Gassen 101 bis 106 eine Transporteinrichtung 190 umfassen, die etwa als Massentransporteur ausgebildet sein kann und die Behälter ungeordnet transportiert. Die ungeordnet ankommenden Behälter werden dann in die Gassen vereinzelt, was beispielsweise durch die äußere Kontur der Begrenzungen 112 und 113 gewährleistet werden kann, die für eine Vereinzelung der Behälter des ungeordneten Behälterstroms sorgen können. Der Massentransporteur kann sich zum weiteren Transportieren der Behälter in den einzelnen Gassen entweder auch bis in die Gassen erstrecken, wobei die Vereinzelung dann durch über dem Massentransporteur angeordnete Abgrenzungen erfolgt, sodass der Massentransporteur ungehindert unter diesen hindurchläuft. Alternativ dazu können in jeder Gasse auch ein oder mehrere Transportbänder angeordnet sein, die eine unabhängige Bewegung der Behälter in jeder Gasse bewirken können.

Die Erfindung ist diesbezüglich jedoch nicht beschränkt.

In diesen Gassen ist jeweils eine Entnahmeeinrichtung 111 bis 161 angeordnet, die einen Behälter aus der Gasse entnehmen und einer Behälteraufnahme 181 bzw. 182 zuführen kann, wie dies in der in Fig. 1 gezeigten schematischen Seitenansicht der Gasse 106 gezeigt ist. Die Entnahmeeinrichtungen 111 bis 161 können dabei einen oder mehrere von unten an einem Behälter ansetzende Entnahmedorne oder ähnliche Einrichtungen umfassen, die den Behälter beispielsweise entlang einer in der Gasse angeordneten Führung 165 in eine Behälteraufnahme 181 bzw. 182 befördern. Dabei kann der Behälter von seiner stehenden Position in der Gasse etwa liegend in die Behälteraufnahme 181 bzw. 182 geführt werden.

Die Behälteraufnahmen sind in der Behälterreinigungsmaschine beweglich angeordnet und können mit einem darin aufgenommenen Behälter durch die Behälterreinigungsmaschine transportiert werden, wobei die Behälteraufnahmen mit den darin angeordneten Behältern dann einen Reinigungsbereich der Behälterreinigungsmaschine passieren können. Dieser Reinigungsbereich 170 ist hier nur schematisch dargestellt, umfasst jedoch üblicherweise ein oder mehrere Reinigungsbäder oder Sprüheinrichtungen, die die zu reinigenden Behälter in den Behälteraufnahmen mit einem Reinigungsmedium beaufschlagen. Dabei handelt es beispielsweise um leicht saure oder basische Lösungen, die Verschmutzungen wie Etiketten und insbesondere Verunreinigungen mit Bakterien, bevorzugt außerhalb und innerhalb des Behälters, entfernen, so dass ein die Behälterreinigungsmaschine verlassender, gereinigter Behälter erneut mit einem Produkt befüllt werden kann.

An die Behälterreinigungsmaschine 100 können sich in Transportrichtung der Behälter dann weitere, hier nicht dargestellte Einrichtungen anschließen, wie etwa ein Füller und ein Verschließer und eine Etikettiereinrichtung, um die gereinigten Behälter weiter zu verarbeiten. Dies ist jedoch nicht zwingend und die Erfindung ist auf eine Verwendung oder das Vorsehen weiterer Einrichtungen nach der Behälterreinigungsmaschine nicht beschränkt.

Fig. 2 zeigt eine detailliertere Ansicht einer Gasse 200 mit dieser zugordneten bzw. an dieser vorbei bewegten Behälteraufnahmen 280 und 281.

Wie bereits mit Bezug auf Fig. 1 beschrieben, werden die Behälter 130 der Reihe nach aus der Gasse durch die Entnahmeeinrichtung 261 entnommen und der jeweiligen Behälteraufnahme 280, 281 zugeführt, um anschließend etwa in der dargestellten vertikalen Pfeilrichtung weiter durch Behälterreinigungsmaschine transportiert zu werden. Die Entnahmeeinrichtung 261 kann hierzu, wie bereits zur Fig. 1 beschrieben, mit einer Führung 265 der Gasse zusammenwirken, um eine geführte Bewegung des Behälters in die Behälteraufnahme zu bewirken. Dabei ist es bekannt, die zeitliche Abfolge bei der Bewegung der Entnahmeeinrichtung 261 und der sich daraus ergebenden Bewegung des Behälters so zu steuern, dass dieser in die vorbeibewegte Behälteraufnahme 280, 281 eingeführt wird, während sich diese weiterbewegt. Alternativ ist auch eine getaktete Bewegung der Behälteraufnahmen möglich, so dass diese jeweils in einer Position zum Stillstand gebracht werden, in der ein Behälter in eine Behälteraufnahme eingeführt werden kann und anschließend weiterbewegt werden.

In der in Fig. 2 dargestellten Ausführungsform ist die Behälteraufnahme 280 leer, so dass dieser der Behälter 231 zugeführt werden kann. Die nachfolgende Behälteraufnahme 281 ist jedoch nicht leer. Hierin befinden sich Bruchstücke 282 einer zuvor beschädigten oder zerstörten Flasche, so dass diese Behälteraufnahme nicht zur Aufnahme eines neuen Behälters, wie etwa dem Behälter 130, bereit ist.

Um zu gewährleisten, dass zumindest ein Teil des Betriebs der Behälterreinigungsmaschine weiter erfolgen kann, ist vorgesehen, dass im Bereich der Gasse 200 eine Sperreinrichtung 210 angeordnet ist, die zumindest ein Sperrelement 212 umfasst, das so betätigt werden kann, dass es die Entnahme eines Behälters 130 aus der Gasse durch die Entnahmeeinrichtung 261 blockiert. Dazu wird das Sperrelement von oberhalb der Transportebene 201, in der der Behälter 130 transportiert wird, in Richtung der Transportebene 201 bewegt und in einer Sperrposition zum Stillstand gebracht, in der ein Behälter 130 das Sperrelement nicht in Richtung der Entnahmeeinrichtung 261 passieren kann, so dass ein Weiterbewegen des Behälters 130 über das Sperrelement 212 hinaus in Richtung der Entnahmeeinrichtung 261 verhindert wird. Das Sperrelement 212 ist dazu stromauf der Entnahmeeinrichtung angeordnet. Wird die Entnahmeeinrichtung weiter betätigt, so greift diese ins Leere und überträgt keinen Behälter in die Behälteraufnahme 281.

Dazu kann bevorzugt vorgesehen sein, dass eine Sperreinrichtung 210, die das Sperrelement 212 und ein Antriebselement 211 umfasst, mit dem das Sperrelement 212 betätigt werden kann für jede Gasse separat vorgesehen ist. Bevorzugt kann das Sperrelement 212 mittels des Antriebselements 211 zwischen einer Freigabeposition, in der der Transport von Behältern durch die Gasse zur Entnahmeeinrichtung 261 freigegeben ist, sowie einer Sperrposition, in der eine Weiterbewegung der Behälter in der Gasse zur Entnahmeeinrichtung blockiert ist, bewirken kann.

Das Sperrelement 212 und/oder das Antriebselement 211 können zu diesem Zweck durch eine mit dem Antriebselement 211 und/oder dem Sperrelement verbundene Steuereinheit 290 der Behälterbehandlungsmaschine angesteuert werden. Die Steuereinheit kann beispielsweise durch Ansteuern des Antriebselements 211 bewirken, dass dieses die Position des Sperrelements von der Freigabeposition in die Sperrposition verändert oder ein Zurückbewegen des Sperrelements von der Sperrposition in die Freigabeposition bewirkt.

Dazu kann das Antriebselement etwa als pneumatisches Element (etwa ein Pneumatikzylinder, der mit dem Sperrelement derart verbunden ist, dass dieses in der hier dargestellten Doppelpfeilrichtung bewegt werden kann) oder als elektrischer Antrieb, wie etwa ein Servoantrieb ausgestaltet sein. Alternativ oder zusätzlich kann dem Antriebselement und/oder dem Sperrelement 212 auch ein Rückstellelement zugeordnet sein, das ein Rückstellen des Sperrelements in die Freigabeposition ermöglicht, ohne dass das Antriebselement 211 aktiv eine Bewegung des Sperrelements von der Sperrposition in die Freigabeposition bewirkt. Bei einer Fehlfunktion des Antriebselements 211 wird so eine Rückstellung des Sperrelements 212 in die Freigabeposition bewirkt.

Die Steuereinheit 290 kann das gezielte Bewegen des Sperrelements der Gasse etwa basierend auf ihr zur Verfügung gestellten Informationen bewirken. Beispielsweise kann die Steuereinheit mit einem oder mehreren Sensoren der Behälterreinigungsmaschine zum Zwecke des Datenaustausches verbunden sein. Diese Verbindung kann etwa drahtlos (über WLAN, BlueTooth oder ähnliche Verbindungen) oder über physische Verbindungen, wie Datenkabel, realisiert sein.

Die Sensoren können beispielsweise Informationen darüber sammeln, ob in einer Behälteraufnahme, wie etwa der Behälteraufnahme 281, Reste eines Behälters enthalten sind, die die Aufnahmefähigkeit der Behälteraufnahme beeinträchtigen bzw. dafür sorgen, dass ein Behälter in dieser Behälteraufnahme nicht aufgenommen werden kann. Solche Informationen können dann der Steuereinheit zur Verfügung gestellt werden, so dass diese die Gasse, der dieser Behälteraufnahme zugeordnet ist, durch Betätigen des Sperrelements bzw. des ihm zugordneten Antriebselements blockiert bzw. sperrt, so dass durch die Entnahmeeinrichtung keine weiteren Behälter dieser Gasse in Behälteraufnahmen überführt werden.

Besonders bevorzugt sind Ausführungsformen, bei denen die Steuereinheit die Betätigung des Sperrelements derart bewirken kann, dass lediglich kein Behälter in eine nicht-aufnahmefähige Behälteraufnahme 281, wie in Fig. 2 dargestellt, befördert werden kann. Alle übrigen Behälteraufnahmen, die zur Aufnahme eines Behälters fähig sind, können dann über die Gasse und die Entnahmeeinrichtung mit Behältern ausgestattet werden, die sie dann durch die Behälterreinigungsmaschine bewegen.

Hierzu kann vorgesehen sein, dass die Steuereinheit abhängig von den ihr übermittelten Informationen und/oder weiteren Informationen, etwa betreffend die Transportgeschwindigkeit der Behälteraufnahmen durch die Behälterreinigungsmaschine, das Sperrelement so betätigt, dass es sich für eine Dauer in der Sperrposition befindet, während der eine Entnahme eines Behälters und Zuführen zur Behälteraufnahme erfolgen würde. Anschließend kann die Steuereinheit das Antriebselement des Sperrelements erneut betätigen, um so das Sperrelement 212 wieder in die Freigabeposition zu bewegen, so dass einer nachfolgenden Behälteraufnahme wieder ein Behälter zugeführt werden, wenn diese Behälteraufnahme funktioniert. Damit ist es möglich, lediglich einzelne Behälteraufnahmen für die Aufnahme eines Behälters zu sperren, ohne dass eine Unterbrechung der Bewegung der Entnahmeeinrichtung erfolgen muss. Gleichzeitig ist es bei Beschädigung lediglich einer Behälteraufnahme nicht notwendig, die Gasse für die gesamte Aufnahme von Behältern zu sperren, bis die fehlerhafte Behälteraufnahme ausgetauscht und/oder repariert und/oder in den funktionsfähigen Zustand versetzt wurde.

Überdies ist vorgesehen, dass das Sperrelement einer Gasse unabhängig von Sperrelementen anderer Gassen betätigt werden kann. Damit wird sichergestellt, dass nur die Anzahl der Gassen selektiv gesperrt wird, die eine fehlerhafte Behälteraufnahme aufweisen bzw. denen eine fehlerhafte Behälteraufnahme zugeordnet ist. Damit wird eine Reduktion des Durchsatzes der Behälterreinigungsmaschine aufgrund fehlerhafter Behälteraufnahmen möglichst geringgehalten.

Gängige Behälterreinigungsmaschinen werden üblicherweise mit einer Vielzahl unterschiedlich geformter und/oder unterschiedlich großer Behälter bestückt, um diese zu reinigen. Da das Sperrelement möglichst genutzt werden soll, um ein Blockieren einer Entnahme eines beliebig geformten Behälters durch die Entnahmeeinrichtung sicherzustellen, so dass weitere Beschädigungen der Behälterreinigungsmaschine und/oder der Behälteraufnahmen vermieden werden, kann es daher notwendig sein, die Positionen, die das Sperrelement einnehmen kann, zu variieren.

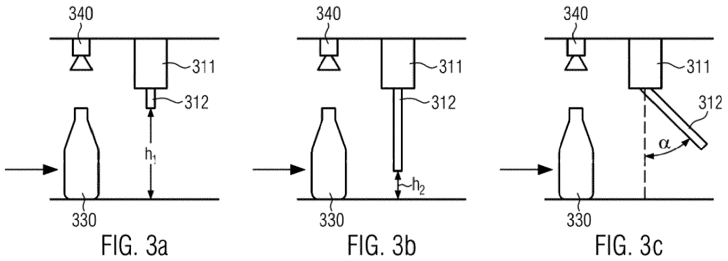

Dazu zeigen die Fig. 3a bis 3c eine Reihe von gemäß einiger Ausführungsformen vorgesehener Einstellmöglichkeiten für Positionen des Sperrelements 312. Das Sperrelement 312 ist hier jeweils in Zusammenhang mit dem Antriebselement 311 dargestellt.

In der Fig. 3a ist das Sperrelement 312 in seiner Freigabeposition gezeigt. In der hier dargestellten Ausführungsform beträgt der Abstand zwischen dem unteren Ende des Sperrelements in Richtung der Transportebene und der Transportebene (die etwa mit einem Transportband zusammenfallen kann) h₁. Gemäß einer Ausführungsform ist vorgesehen, dass der Abstand des unteren Endes des Sperrelements 312 in dieser Freigabeposition zu der Transportebene einstellbar ist. Dies kann genutzt, um das Passieren unterschiedlich großer Behälter zu ermöglichen. Ein Behälter 330, der in der Fig. 3a dargestellt ist, wird in der hier gezeigten Ansicht unter dem Sperrelement 312 in seiner Freigabeposition passieren können, so dass ein von dem Sperrelement in seiner Freigabeposition nicht behinderter Transport der Behälter zur Entnahmeeinrichtung (hier nicht dargestellt) erfolgen kann.

Die Einstellung der Höhe h₁ des Sperrelements in seiner Freigabeposition kann etwa durch eine flexible Aufhängung oder Befestigung in dem Antriebselement bewirkt werden. Alternativ oder zusätzlich kann vorgesehen sein, dass die Position des Antriebselements mit dem darin angeordneten Sperrelement variabel ist, indem etwa ein Verfahren des Antriebselements zumindest in vertikaler Richtung von der Transportebene weg oder auf diese zu möglich ist, womit gleichzeitig das Sperrelement bewegt wird.

Die Einstellung der Position des Sperrelements in seiner Freigabeposition und damit ein Einstellen der Höhe h₁ kann etwa für unterschiedliche Behandlungszyklen der Behälterreinigungsmaschine vorgenommen werden, wenn die Behälterreinigungsmaschine während eines Behandlungszyklus lediglich Behälter einer Sorte und damit einer Form und/oder Größe behandelt. Bei einem Wechsel der Behandlungszyklen kann dann, falls erforderlich, eine Änderung der Position des Sperrelements in seiner Freigabeposition bewirkt werden.

Alternativ oder zusätzlich kann ein Sensor 340 stromauf des Sperrelements 312 angeordnet sein, der etwa als Kamera oder Lichtschranke oder Ähnliches ausgeführt ist, um die Höhe eines Behälters zu bestimmen. Basierend auf der Höhe des Behälters kann dann die Höhe h₁ des unteren Endes des Sperrelements gemessen von der Transportebene aus eingestellt werden, um zu gewährleisten, dass jeder Behälter, unabhängig von seiner Größe, das Sperrelement passieren kann, wenn dieses in der Freigabeposition angeordnet ist. Diese Ausführungsform ist besonders bevorzugt, wenn das Antriebselement als Servomotor ausgebildet ist und die Bewegungsamplitude dieses Sperrelements im Prinzip beliebig einstellbar ist.

Ist der Sensor 340 als Lichtschranke ausgebildet, so können in vertikaler Richtung mehrere Lichtschranken angeordnet sein, die zueinander beabstandet sind. Passiert ein Behälter diese Reihe von Lichtschranken, so werden ein oder mehrere Lichtschranken die Gegenwart eines Behälters detektieren, wobei andere Lichtschranken detektieren, dass kein Behälter vorhanden ist. Die Lichtschranke, die signalisiert, dass kein Behälter vorhanden ist, und die von der Anzahl der Lichtschranken, die signalisieren, dass kein Behälter vorhanden ist, am nächsten an der Transportebene ist (also die geringste Höhe gemessen von der Transportebene aus aufweist), kann dann als Indikator genutzt werden, um die Höhe h₁ für das Sperrelement zu bestimmen und entsprechend einzustellen, sofern dies nötig ist. Die Anzahl der Lichtschranken kann etwa abhängig von einer Anzahl unterschiedlicher Behälterformate, die mit der Behälterreinigungsmaschine behandelt werden können, gewählt werden. Die Anzahl und Position der Lichtschranken kann so gewählt werden, dass sie der Anzahl verschiedener Behälterhöhen entsprechen, die mit der Behälterreinigungsmaschine behandelt werden können. Die Höhe jeder der Lichtschranken kann dabei so gewählt werden, dass jede Lichtschranke geringfügig höher angeordnet ist, als die Höhe des ihr zugeordneten Behälterformats. Können beispielsweise zwei Behälterformate mit einer Höhe von 20cm und 30cm mit der Behälterreinigungsmaschine behandelt werden, kann vorgesehen sein, dass eine erste Lichtschranke in einer Höhe von 22cm angeordnet ist und eine zweite Lichtschranke in einer Höhe von 32cm. Die Höhe h₁ des Sperrelements kann dann auf die Höhe der Lichtschranken oder geringfügig darüber eingestellt werden, etwa 22,5cm und 32,5cm.

Mit der in einer Höhe von 22cm über der Transportebene angeordneten Lichtschranke können alle Behälter erkannt werden, die eine Höhe größer als 20cm aufweisen. Die zweite Lichtschranke kann als Sicherung genutzt werden, um sicherzustellen, dass nicht versehentlich ein Behälter, der keinem der beiden beispielhaften Formate entspricht, in eine Behälteraufnahme überführt wird.

Fig. 3b zeigt eine weitere Ausführungsform, in der eine Höhe h₂ des unteren Endes des Sperrelements 312 gemessen von der Transportebene der Behälter 330 aus eingestellt wird. Die Höhe h₂ entspricht dabei der Lage des Sperrelements in der Sperrposition. Dies kann etwa vorteilhaft sein, wenn aufgrund der Form der Behälter ein Angreifen des Sperrelements am unteren Ende der Behälter nicht sinnvoll ist und/oder wenn die Behälter eine geringe Größe aufweisen.

Wird diese Ausführungsform kombiniert mit der Ausführungsform nach Fig. 3a, so kann die notwendige Bewegungsamplitude des Sperrelements von der Freigabeposition in die Sperrposition möglichst klein gehalten werden, was ein schnelles Freigeben und Blockieren ermöglicht. Dadurch kann auch unbeabsichtigtes Berühren von Behältern und ein eventuell damit einhergehendes unbeabsichtigtes Umkippen der Behälter vermieden werden. Analog zur Ausführungsform der Fig. 3a kann die Feststellung der Höhe h₂ etwa mit Hilfe eines Sensors (Kamera und/oder Lichtschranke(n) oder Ähnliches) erfolgen. Alternativ oder zusätzlich kann vorgesehen sein, dass die Einstellung der Position und/oder insbesondere der Höhe h₂ des Sperrelements in der Sperrposition etwa beim Wechsel von Behandlungszyklen der Behälterreinigungsmaschine eingestellt wird. Wechseln von einem ersten Behandlungszyklus auf einen zweiten Behandlungszyklus etwa die Größen und/oder Formen der zu reinigenden Behälter, kann eine Einstellung der Höhe h₂ erfolgen. Die Einstellung dieser Position kann etwa durch Einstellung der Position des Sperrelements selbst (etwa durch entsprechende Ansteuerung des Antriebselements 311) erfolgen, wie dies mit Bezug auf Fig. 3a beschrieben wurde. Alternativ oder zusätzlich kann auch das Antriebselement 311 gemeinsam mit dem Sperrelement bewegt werden.

Fig. 3c zeigt eine weitere Ausführungsform, bei der die Bewegungen des Sperrelements nicht allein eine vertikale Bewegung umfasst, sondern auch ein Verkippen des Sperrelements von der Freigabeposition in die Sperrposition umfassen kann. Dieses Verkippen kann um einen Winkel α (Anstellwinkel) erfolgen, wobei das Verkippen zusätzlich oder alternativ zu einer vertikalen Bewegung vorgesehen sein kann.

Diese Ausführungsform kann besonders bevorzugt sein, wenn die Behälter in vertikaler Richtung stark abweichende Abmessungen aufweisen und beispielsweise nicht im Wesentlichen zylindrisch, sondern konisch geformt sind. Durch Einstellen eines maximalen Anstellwinkels des Sperrelements kann dann eine Anpassung des Sperrelements an die äußere Kontur der Behälter erfolgen. Die Notwendigkeit dieser Einstellung und die spezifische Einstellung des Anstellwinkels kann analog zu den Fig. 3a und 3b basierend auf Informationen des Sensors 340 erfolgen, der beispielsweise den Anstellwinkel der äußeren Oberfläche des Behälters misst und ein darauf basierendes Signal etwa an die Steuereinheit ausgibt, die dann die Bewegung des Sperrelements um den Winkel α steuert. Beträgt der Anstellwinkel der äußeren Oberfläche des Behälters beispielsweise β (gemessen zwischen Längsachse des Behälters und der äußeren Oberfläche), so kann der Anstellwinkel α so eingestellt werden, dass er dem Anstellwinkel β der äußeren Oberfläche entspricht.

Während das Sperrelement in der Fig. 3c um einen Winkel α angestellt ist, so dass das Sperrelement 312 in seiner Sperrposition in Richtung der Bewegungsrichtung der Behälter verkippt ist, ist dies nicht notwendig. Alternativ oder zusätzlich kann auch ein Verkippen des Sperrelements entgegen der Transportrichtung der Behälter vorgesehen sein. Damit wird bewirkt, dass bei einem beispielsweise im Wesentlichen zylindrisch geformten Behälter das Sperrelement an der Oberfläche des Behälters nur an einem Punkt angreift, um ein Sperren bzw. Blockieren der Gasse für diesen Behälter zu bewirken. Dies kann vorteilhaft sein, um ein Berühren des Behälters an einem Punkt zu erreichen, der verglichen mit dem Schwerpunkt näher an der Transportebene des Behälters liegt, um ein Berühren des Behälters im unteren Bereich zu bewirken und so ein Umkippen des Behälters in der Gasse zu vermeiden. Alternativ kann auch vorgesehen sein, dass das Anstellen des Sperrelements 312 so erfolgt, dass der Behälter auf Höhe seines Schwerpunkts berührt wird.

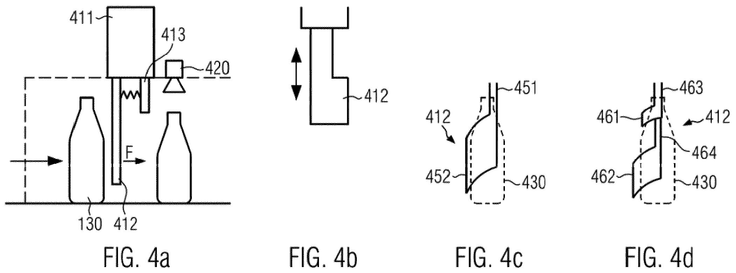

Die Fig. 4a bis d zeigen weitere Ausgestaltungen des Sperrelements, die einzeln und in Kombination miteinander und in Kombination mit allen obigen Ausführungsformen eingesetzt werden können.

In Fig. 4a ist das Sperrelement 412 gemeinsam mit dem Antriebselement 411 gezeigt. In der hier dargestellten Ausführungsform ist dem Antriebselement und/oder dem Sperrelement 412 weiterhin ein Kraftaufnahmeelement 413 zugeordnet. Dies kann beispielsweise als ein Anschlag mit einem Federelement ausgestaltet sein, das das Sperrelement 412 gegen den Anschlag abstützt. Der Anschlag befindet sich bevorzugt in Transportrichtung nach dem Sperrelement 412. Hierdurch wird erreicht, dass ein auf das Sperrelement 412 einwirkender Druck eines in Richtung des Sperrelements (siehe Pfeilrichtung) transportierten Behälters und die damit einwirkende Kraft F auf das Sperrelement 412 durch das Kraftaufnahmeelement 413 aufgenommen und abgeleitet wird. Damit wird das Sperrelement auch bei hohem Staudruck der Behälter stabilisiert, so dass Beschädigungen des Sperrelements vermieden werden können.

Alternativ oder zusätzlich kann entsprechend der Fig. 4a vorgesehen sein, dass stromab des Sperrelements ein Sensor 420 oder andere Erkennungseinrichtungen vorgesehen sind, die einen Behälter bzw. die Anwesenheit eines Behälters im Bereich des Sperrelements 412 und/oder insbesondere des stromab des Sperrelements detektieren. Hiermit kann vor Betätigung des Sperrelements geprüft werden, ob sich in dem Bereich des Sperrelements und insbesondere im Bewegungsbereich des Sperrelements ein Behälter befindet, der zunächst in eine Behälteraufnahme überführt werden muss, bevor das Sperrelement betätigt wird. So kann sichergestellt werden, dass Betätigungen des Sperrelements nicht unabsichtlich zu umfallenden oder beschädigten Behältern im Bereich der Gasse führen.

Der Sensor 420 kann beispielsweise als eine Lichtschranke und/oder eine Kamera umfassend ausgebildet sein und beispielsweise mit der im Zusammenhang mit der Fig. 2 beschriebenen Steuereinheit verbunden sein, so dass die Steuereinheit ein Betätigen des Steuerelements auch basierend auf Informationen dieses Sensors 420 zur Anwesenheit und/oder Abwesenheit eines Behälters bewirken kann.

Fig. 4b zeigt eine Ausführungsform des Sperrelements in Gestalt eines flachen L-Stückes 412, das entsprechend der Doppelpfeilrichtung aufwärts und abwärts bewegt werden kann. Anstelle eines L-Stücks kann auch ein flaches T-Stück verwendet werden oder eine sonstige geeignete flache Struktur. Auch eine im Wesentlichen rechteckige Kontur des Sperrelements kann angedacht sein. Bevorzugt ist es, wenn die hier dargestellte Fläche des Sperrelements 412 flächig an dem Behälter anliegt oder zumindest an einem Teil der Behälteroberfläche anliegt.

Fig. 4c zeigt eine weitere Ausführungsform des Sperrelements 412. In dieser Ausführungsform umfasst das Sperrelement ein Verbindungselement 451, das mit einem Antriebselement verbunden sein kann, sowie ein Berührungselement 452. Dieses Berührungselement 452 kann bevorzugt geformt sein, um mit der äußeren Kontur von mit der Behältereingangsmaschine zu reinigenden Behältern in Anlage gebracht zu werden. Insbesondere kann der Krümmungsradius dieses Berührungselements 452 dem äußeren Krümmungsradius eines Behälters 430 entsprechen.

Fig. 4d zeigt eine weitere Ausführungsform eines Sperrelements 412. In dieser Ausführungsform umfasst das Sperrelement ein erstes Verbindungselement 463, das mit dem Antriebselement verbunden sein kann. Mit dem ersten Verbindungselement 463 verbunden ist eine erste Berührungsfläche 461. Diese erste Berührungsfläche kann ausgestaltet und angeordnet sein, um in der Sperrposition des Sperrelements berührenden Kontakt mit einem Flaschenhals oder einem ansonsten einen vergleichsweise geringen Krümmungsradius aufweisenden Bereich eines Behälters herzustellen und den Behälter in diesem Bereich abzustützen. Dem ersten Berührungselement 461 schließt sich in dieser Ausführungsform ein zweites Verbindungselement 464 an, das eine Verbindung zwischen dem ersten Berührungselement 461 und einem zweiten Berührungselement 462 herstellt. Das zweite Berührungselement kann analog zur Fig. 4c ausgebildet sein und eine gekrümmte Fläche umfassen, deren Krümmungsradius größer ist als die des ersten Berührungselements 461. Dieses Berührungselement 462 kann dann an einem Bereich des Behälters anliegen (in der Sperrposition des Sperrelements), der einen größeren Krümmungsradius aufweist als der mit dem ersten Berührungselement in Kontakt tretende Teil des Behälters.

Durch die Fig. 4c und d entsprechenden Ausführungsformen wird ein sicherer Halt eines Behälters in einer Sperrposition des Sperrelements bewirkt, so dass dieser weder beschädigt wird noch umfallen kann. Es versteht sich, dass das Sperrelement 412 der Fig. 4c oder 4d zwar unterteilt werden kann in eine oder mehrere Verbindungselemente und ein oder mehrere Berührungselemente. Diese Unterteilung muss sich jedoch nicht in der tatsächlichen Struktur des Sperrelements 412 widerspiegeln. Die Sperrelemente 412 der Ausführungsformen der Fig. 4c und 4d können auch einstückig gefertigt sein, oder die Berührungselemente 461 und 462 können lösbar mit einem ansonsten durchgängigen Verbindungselement verbunden sein, so dass sie etwa bei einer Umstellung der Behälterreinigungsmaschine von einem ersten Behandlungszyklus, in dem Behälter einer ersten Größe und/oder Form behandelt werden, auf einen zweiten Behandlungszyklus, in dem Behälter mit einer anderen Behältergröße und/oder Form behandelt werden, ausgetauscht werden können.

Während in den vorangegangenen Ausführungsform im Wesentlichen Bezug auf ein einzelnes Sperrelement einer einzigen Gasse genommen wurde, versteht es sich, dass für jede Gasse jeweils ein Sperrelement entsprechend der oben genannten Ausführungsformen und Kombinationen davon vorgesehen sein können.

Dabei kann es in einigen Ausführungsformen besonders vorteilhaft sein, wenn ein sich über sämtliche Gassen erstreckendes Trägerelement vorgesehen ist, an dem jedes einzelne Sperrelement und/oder die Antriebselemente angeordnet sind. Damit wird eine Fixierung der Sperrelemente etwa an den Begrenzungen der Gasse unnötig und eine stabile Konstruktion realisiert, die auch die auf die Sperrelemente wirkenden Kräfte aufnehmen kann. Gleichzeitig können die Sperrelemente und/oder Antriebselemente an der gemeinsamen Aufhängung bzw. dem gemeinsamen Trägerelement schnell-wechselbar (also ohne die zwingende Verwendung von Werkzeug) angeordnet sein, etwa durch Klemmverschlüsse oder Ähnliches. Damit ist ein einfacher Austausch von Sperrelementen ggf. zusammen mit ihrem Antriebselement möglich.

## Patentansprüche

1. Behälterreinigungsmaschine (100) zum Reinigen von Behältern, wie Flaschen, umfassend eine Vielzahl von Gassen (101-106), in denen Behälter einreihig in einer Transportebene transportiert werden können, und eine Vielzahl jeweils einer Gasse zugeordneter Entnahmeeinrichtungen (161), die einen Behälter aus der Gasse entnehmen und einer Behälteraufnahme (181, 182) der Behälterreinigungsmaschine (100) zuführen können, die einen Behälter durch einen Reinigungsbereich (170) der Behälterreinigungsmaschine transportieren kann, wobei wenigstens eine Gasse (101-106) ein unabhängig betätigbares Sperrelement (212) umfasst, das von oberhalb der Transportebene in Richtung der Transportebene bewegt werden kann, um ein Entnehmen eines Behälter aus der Gasse (101-106) durch die Entnahmeeinrichtung (161) zu blockieren, wobei das Sperrelement (212) zwischen einer Freigabeposition, in der die Entnahme eines Behälters nicht blockiert wird, und einer Sperrposition, in der die Entnahme eines Behälters blockiert wird, bewegt werden kann, wobei eine Position des Sperrelements (212) in der Freigabeposition und/oder der Sperrposition in einer Richtung senkrecht zur Transportebene einstellbar ist, **dadurch gekennzeichnet, dass** ein Anstellwinkel des Sperrelements (212) relativ zur Transportebene einstellbar ist.

2. Behälterreinigungsmaschine nach Anspruch 1, weiterhin umfassend ein Antriebselement (211) für jedes Sperrelement (212), wobei das Antriebselement durch eine Steuereinheit (290) der Behälterreinigungsmaschine (100) zum Betätigen des Sperrelements (212) angesteuert werden kann.

3. Behälterreinigungsmaschine nach Anspruch 2, wobei die Steuereinheit (290) ausgebildet ist, das Betätigen des Sperrelements (212) mittels des Antriebselements (211) so zu steuern, dass es die Entnahme eines Behälters für wenigstens eine Behälteraufnahme (280, 281) blockieren kann.

4. Behälterreinigungsmaschine nach einem der Ansprüche 1 bis 3, wobei die Behälterreinigungsmaschine weiterhin einen Massentransporteur (190) stromauf der Vielzahl von Gassen (101-106) umfasst und der Massentransporteur Behälter den Gassen zuführen kann.

5. Behälterbehandlungsmaschine nach einem der Ansprüche 1 bis 4, wobei eine Gasse (101-106) eine Erkennungseinrichtung im Bereich des Sperrelements umfasst, wobei die Erkennungseinrichtung (420) zum Erkennen eines Behälters in dem Bereich ausgebildet ist.

6. Behälterreinigungsmaschine nach einem der Ansprüche 1 bis 5, wobei wenigstens eine Gasse (101-106) ein Kraftaufnahmeelement (413) umfasst, das auf das Sperrelement (212) der Gasse in Transportrichtung der Behälter wirkende Kräfte aufnehmen und ableiten kann.

7. Behälterreinigungsmaschine nach einem der Ansprüche 1 bis 6, wobei jede Gasse (101-106) ein Sperrelement (212) umfasst.

8. Verfahren zum Reinigen von Behältern, wie Flaschen, mit einer Behälterreinigungsmaschine (100), die Behälterreinigungsmaschine umfassend eine Vielzahl von Gassen (101-106), in der Behälter einreihig in einer Transportebene transportiert werden, und eine Vielzahl jeweils einer Gasse zugeordneter Entnahmeeinrichtungen (161), die einen Behälter aus der Gasse (101-106) entnehmen und einer Behälteraufnahme (181, 182) der Behälterreinigungsmaschine zuführen, die einen aufgenommenen Behälter durch einen Reinigungsbereich (170) der Behälterreinigungsmaschine transportiert, wobei wenigstens eine Gasse (101-106) ein unabhängig betätigbares Sperrelement (212) umfasst, das von oberhalb der Transportebene in Richtung der Transportebene bewegt wird, sodass ein Entnehmen eines Behälter aus der Gasse (101-106) durch die Entnahmeeinrichtung (161) blockiert wird, wobei das Sperrelement (212) zwischen einer Freigabeposition, in der die Entnahme eines Behälters nicht blockiert wird, und einer Sperrposition, in der die Entnahme eines Behälters blockiert wird, bewegt wird, wobei eine Position des Sperrelements (212) in der Freigabeposition und/oder der Sperrposition in einer Richtung senkrecht zur Transportebene einstellbar ist, **dadurch gekennzeichnet, dass** ein Anstellwinkel des Sperrelements (212) relativ zur Transportebene einstellbar ist.

9. Verfahren nach Anspruch 8, wobei die Behälterreinigungsmaschine (100) ein Antriebselement (211) für jedes Sperrelement (212) umfasst, wobei das Antriebselement durch eine Steuereinheit (290) der Behälterreinigungsmaschine angesteuert wird, um das Sperrelement (212) zu betätigen.

10. Verfahren nach Anspruch 9, wobei die Steuereinheit (290) das Betätigen des Sperrelements (212) mittels des Antriebselements (211) so steuert, dass die Entnahme eines Behälters für eine Dauer blockiert wird, die wenigstens einem Entnahmevorgang entspricht.

11. Verfahren nach Anspruch 9 oder 10, wobei die Steuereinheit (290) das Antriebselement (211) abhängig von einer Information, die indikativ für die Aufnahmefähigkeit einer Behälteraufnahme (181, 182) ist, so steuert, dass, wenn die Information angibt, dass die Behälteraufnahme keinen Behälter aufnehmen kann, die Entnahme eines Behälters blockiert wird und die Entnahme eines Behälters wieder freigegeben wird, wenn die Information für eine andere Behälteraufnahme angibt, dass die andere Behälteraufnahme einen Behälter aufnehmen kann.

12. Verfahren nach Anspruch 8, wobei die Position des Sperrelements (212) abhängig von einer Größe eines Behälters eingestellt wird.

## Claims

1. A container cleaning machine (100) for cleaning containers, e.g. bottles, comprising a plurality of passages (101-106) wherein the containers can be transported in a single row within a transport plane, and a plurality of removal devices (161) each allocated to one passage for removing a container from the passage and supplying the same to a container receptacle (181, 182) of the container cleaning machine (100) which is able to transport a container through a cleaning area (170) of the container cleaning machine, wherein at least one passage (101-106) comprises an independently actuatable blocking element (212) which can be moved from above the transport plane towards the same for blocking a removal of a container from the passage (101-106) by the removal device (161), wherein the blocking element (212) can be moved between a release position in which the removal of a container is not blocked and a blocking position in which the removal of a container is blocked, wherein an orientation of the blocking element (212) can be adjusted in the release position and/or the blocking position in a direction perpendicular to the transport plane, **characterized in that** an angle of orientation of the blocking element (212) relative to the transport plane is adjustable.

2. The container cleaning machine according to claim 1, further comprising a drive element (211) for each blocking element (212), wherein the drive element can be driven by a controller (290) of the container cleaning machine (100) for actuating the blocking element (212).

3. The container cleaning machine according to claim 2, wherein the controller (290) is configured for controlling the actuation of the blocking element (212) by means of the drive element (211) so that the same can block the removal of a container for at least one container receptacle (280, 281).

4. The container cleaning machine according to anyone of claims 1 to 3, wherein the container cleaning machine further comprises a bulk conveyor (190) upstream of the plurality of passages (101-106) and wherein the bulk conveyor is able to feed containers to the passages.

5. The container cleaning machine according to anyone of claims 1 to 4, wherein a passage (101-106) comprises a detection device in the area of the blocking element, wherein the detection device (420) is configured to detect a container within said area.

6. The container cleaning machine according to anyone of claims 1 to 5, wherein at least one passage (101-106) comprises a force receiving element (413) which is able to receive a force acting on the blocking element (212) of said passage in the transport direction of the container and to dissipate the same.

7. The container cleaning machine according to anyone of claims 1 to 6, wherein each passage (101-106) comprises a blocking element (212).

8. A method for cleaning containers, e.g. bottles, by means of a container cleaning machine (100), the container cleaning machine comprising a plurality of passages (101-106) wherein the containers can be transported in a single row within a transport plane, and a plurality of removal devices (161) each allocated to one passage for removing a container from the passage (101-106) and supplying the same to a container receptacle (181, 182) of the container cleaning machine which is able to transport a container through a cleaning area (170) of the container cleaning machine, wherein at least one passage (101-106) comprises an independently actuatable blocking element (212) which can be moved from above the transport plane towards the same for blocking a removal of a container from the passage (101-106) by the removal device (161), wherein the blocking element (212) can be moved between a release position in which the removal of a container is not blocked and a blocking position in which the removal of a container is blocked, wherein an orientation of the blocking element (212) can be adjusted in the release position and/or the blocking position in a direction perpendicular to the transport plane, **characterized in that** an angle of orientation of the blocking element (212) relative to the transport plane is adjustable.

9. The method according to claim 8, wherein the container cleaning machine (100) comprises a drive element (211) for each blocking element (212), wherein the drive element is driven by a controller (290) of the container cleaning machine for actuating the blocking element (212).

10. **The** method according to claim 9, wherein the controller (290) controls the actuation of the blocking element (212) by means of the drive element (211) so that the removal of a container is blocked for a period corresponding to at least one removal operation.

11. **The** method according to claims 9 or 10, wherein the controller (290) controls the drive element (211) as a function of information indicating the capacity of a container receptacle (181, 182) so that in case the information indicates that the container receptacle is not able to receive a container the removal of a container is blocked and the removal of a container is enabled again in case the information indicates for another container receptacle the capacity to receive a container of the other container receptacle.

12. **The** method according to claim 8, wherein the position of the blocking element (212) can be adjusted according to a size of a container.

## Revendications

1. Machine de nettoyage de récipients (100) pour le nettoyage de récipients, tels que des bouteilles, comprenant une pluralité de voies (101-106) dans lesquelles des récipients peuvent être transportés en une seule rangée dans un plan de transport, et une pluralité de dispositifs de prélèvement (161) associés chacun à une voie, qui peuvent prélever un récipient hors de la voie et l'amener dans un logement de récipient (181, 182) de la machine de nettoyage de récipients (100), qui peuvent transporter un récipient à travers une zone de nettoyage (170) de la machine de nettoyage de récipients, dans laquelle au moins une voie (101-106) comprend un élément d'arrêt (212) pouvant être actionné indépendamment, qui peut être déplacé depuis le dessus du plan de transport dans la direction du plan de transport pour bloquer le prélèvement d'un récipient hors de la voie (101-106) via le dispositif de prélèvement (161), dans laquelle l'élément d'arrêt (212) peut être déplacé entre une position de libération dans laquelle le prélèvement d'un récipient n'est pas bloqué et une position d'arrêt dans laquelle le prélèvement d'un récipient est bloqué, dans laquelle une position de l'élément d'arrêt (212) peut être réglée dans la position de libération et/ou dans la position de blocage dans une direction perpendiculaire au plan de transport, **caractérisée en ce qu'**un angle d'attaque (212) peut être réglé par rapport au plan de transport.

2. Machine de nettoyage de récipients selon la revendication 1, comprenant en outre un élément d'entraînement (211) pour chaque élément d'arrêt (212), dans laquelle l'élément d'entraînement peut être commandé par une unité de commande (290) de la machine de nettoyage de récipients (100) pour actionner l'élément d'arrêt (212).

3. Machine de nettoyage de récipients selon la revendication 2, dans laquelle l'unité de commande (290) est conçue pour commander l'actionnement de l'élément de verrouillage (212) au moyen de l'élément d'entraînement (211) de manière à ce qu'il puisse bloquer le prélèvement d'un récipient pour au moins un logement de récipient (280, 281).

4. Machine de nettoyage de récipients selon l'une quelconque des revendications 1 à 3, dans lequel la machine de nettoyage de récipients comprend en outre un transporteur de gros volumes (190) en amont de la pluralité de voies (101 à 106) et le transporteur de gros volumes peut alimenter les voies en récipients.

5. Machine de traitement de récipients selon l'une quelconque des revendications 1 à 4, dans laquelle une voie (101-106) comprend un dispositif de détection dans la zone de l'élément d'arrêt, dans laquelle le dispositif de détection (420) est conçu pour détecter un récipient dans la zone.

6. Machine de nettoyage de récipients selon l'une quelconque des revendications 1 à 5, dans laquelle au moins une voie (101-106) comprend un élément de réception de force (413) qui peut absorber et dissiper des forces agissant sur l'élément d'arrêt (212) de la voie dans la direction de transport des récipients.

7. Machine de nettoyage de récipients selon l'une quelconque des revendications 1 à 6, dans laquelle chaque voie (101-106) présente un élément d'arrêt (212).

8. Procédé de nettoyage de récipients, tels que des bouteilles, avec une machine de nettoyage de récipients (100), la machine de nettoyage de récipients comprenant une pluralité de voies (101-106) dans lesquelles des récipients sont transportés en une seule rangée dans un plan de transport, et une pluralité de dispositifs de prélèvement (161) associés chacun à une voie, qui prélèvent un récipient à partir de la voie (101-106) et l'acheminent à un logement de récipient (181, 182) de la machine de nettoyage de récipients, qui transporte un récipient reçu à travers une zone de nettoyage (170) de la machine de nettoyage de récipients, dans lequel au moins une voie (101-106) comprend un élément d'arrêt (212) pouvant être actionné indépendamment, qui est déplacé depuis le dessus du plan de transport vers le plan de transport, de sorte qu'un retrait d'un récipient à partir de la voie (101-106) est bloqué par le dispositif de prélèvement (161), dans lequel l'élément d'arrêt (212) peut être déplacé entre une position de libération dans laquelle le prélèvement d'un récipient n'est pas bloqué et une position d'arrêt dans laquelle le prélèvement d'un récipient est bloqué, dans lequel une position de l'élément d'arrêt (212) peut être réglée dans la position de libération et/ou dans la position d'arrêt dans une direction perpendiculaire au plan de transport, **caractérisé en ce qu'**un angle d'attaque (212) peut être réglé par rapport au plan de transport.

9. Procédé selon la revendication 8, dans lequel la machine de nettoyage de récipients (100) comprend un élément d'entraînement (211) pour chaque élément d'arrêt (212), dans lequel l'élément d'entraînement est commandé par une unité de commande (290) de la machine de nettoyage de récipients pour actionner l'élément d'arrêt (212).

10. Procédé selon la revendication 9, dans lequel l'unité de commande (290) commande l'actionnement de l'élément d'arrêt (212) au moyen de l'élément d'entraînement (211) de manière à bloquer le prélèvement d'un récipient pendant une durée qui correspond à au moins une opération de prélèvement.

11. Procédé selon la revendication 9 ou 10, dans lequel l'unité de commande (290) commande l'élément d'entraînement (211) en fonction d'une information indicative de la capacité de réception d'un logement de récipient (181, 182), de sorte que lorsque l'information indique que le logement de récipient ne peut pas recevoir de récipient, le prélèvement d'un récipient est bloqué et le prélèvement d'un récipient est libéré à nouveau lorsque l'information indique pour un autre logement de récipient que l'autre logement de récipient peut recevoir un récipient.

12. Procédé selon la revendication 8, dans lequel la position de l'élément d'arrêt (212) est réglée en fonction d'une taille d'un récipient.
